# EUROPÄISCHE PATENTSCHRIFT

(11) **EP 2 345 513 B1**
(45) Veröffentlichungstag und Bekanntmachung des Hinweises auf die Patenterteilung: **18.01.2023**
(21) Anmeldenummer: 11000099.9
(22) Anmeldetag: 07.01.2011
(51) Int. Cl.: B25J 9/16, G05B 19/042

(54) **Entwicklungsumgebung und Verfahren zur Planung einer Roboterapplikation**
Development environment and method for planning a robotic application
Environnement de développement et procédé destinés à la planification d'une application de robot

(30) Priorität: 13.01.2010 DE 102010004477; 13.01.2010 DE 102010004476
(43) Veröffentlichungstag der Anmeldung: 20.07.2011
(73) Patentinhaber: KUKA Deutschland GmbH, 86165 Augsburg (DE)
(72) Erfinder: Hollmann, Stefan, 86157 Ausburg (DE); Huggenberger, Ulrich, 86153 Augsburg (DE); Spatzier-Beck, Rainer, 86152 Augsburg (DE); Sulski, Kasimier, 86343 Königsbrunn (DE); Tarragona, Dr. Christian, 86159 Augsburg (DE)
(74) Vertreter: Schlotter, Alexander Carolus Paul

(56) Entgegenhaltungen:
- WO-A1-2008/078890
- DE-A1- 10 129 564
- JP-A- 2008 033 419
- US-B1- 6 944 584
- C.S. TZAFESTAS ET AL: "Virtual and Remote Robotic Laboratory: Comparative Experimental Evaluation", IEEE TRANSACTIONS ON EDUCATION., vol. 49, no. 3, 1 August 2006 (2006-08-01) , pages 360-369, XP55618462, US ISSN: 0018-9359, DOI: 10.1109/TE.2006.879255
- Arif Kazi ET AL: "Style Guide for Icon-based Programming", , 1 June 2003 (2003-06-01), pages 1-55, XP055172168, Retrieved from the Internet: URL:http://www.morpha.de/download/MORPHA_S tyle_Guide.pdf [retrieved on 2015-02-25]
- ANONYMOUS: "ISO 15187:2000 Manipulating industrial robots - Graphical user interfaces for programming and operation of robots (GUI-R)", ISO, ISO, CH , 1 November 2000 (2000-11-01), pages 1-22, XP009526278, Retrieved from the Internet: URL:https://www.iso.org/standard/26697.htm l [retrieved on 2021-03-12]
- Hirzinger G. ET AL: "The DLR-KUKA Success Story", IEEE ROBOTICS & AUTOMATION MAGAZINE., vol. 12, no. 3, 1 September 2005 (2005-09-01), pages 16-23, XP055847220, US ISSN: 1070-9932, DOI: 10.1109/MRA.2005.1511865
- C.S. Tzafestas ET AL: "Virtual and Remote Robotic Laboratory: Comparative Experimental Evaluation", IEEE Transactions on Education, vol. 49, no. 3, 1 August 2006 (2006-08-01) , pages 360-369, XP055618462, USA ISSN: 0018-9359, DOI: 10.1109/TE.2006.879255

## Beschreibung

Die vorliegende Erfindung betrifft eine Entwicklungsumgebung und ein Verfahren zur Planung einer Roboterapplikation auf Basis eines Modells der Roboterapplikation.

Die US 6 944 584 B1 betrifft ein System, das Geräte steuert und die gesteuerte Bewegung von Geräten integriert simuliert.

Die JP 2008 033419 A betrifft eine CAD-Vorrichtung zum Teachen von Robotern mit einem CAD-Abschnitt, der ein virtuelles Fahrzeug und einen virtuellen Roboter einrichtet, der in einem virtuellen Raum eine Operation an dem Fahrzeug durchführt, einem Monitor, der einen virtuellen Raum anzeigt, der den virtuellen Roboter enthält, und einem Programmabschnitt, der auf den CAD-Abschnitt zugreift und diesen CAD-Abschnitt betreibt.

Der Artikel Hierzinger G. et al., "The DLR-KUKA Success Story", IEEE Robotics&Automation Magazine, Bd. 12, Nr. 3, September 2005, Seiten 16-23 beschreibt die Optimierung von Roboterdesign, wobei der noch nicht existierende Roboter durch eine Real-time-Simulation unter Verwendung der aktuellen Robotersteuerungshardware ersetzt wird.

Beispielsweise aus der WO 00/25185 A1, US 2006/0025890 A1 und US 2004/0213915 A1 sowie der nicht vorveröffentlichten eigenen internationalen Anmeldung PCT/EP2009/003443 sind Entwicklungsumgebungen zur Planung von Roboterapplikationen auf Basis von Modellen der Applikation, insbesondere eines Roboters und eines von ihm zu bearbeitenden Werkstücks, bekannt.

Auf der anderen Seite werden Kontrollschnittstellen, beispielsweise Oberflächen von Bedienhandgeräten, mit denen die Applikation bedient wird, bisher separat durch Programmieren in einer entsprechenden, spezialisierten Programmiersprache generiert. Zum Beispiel schlägt die EP 1 136 192 A2 die Verwendung von Microsoft Visual Basic vor, um eine applikationsspezifische graphische Benutzerschnittstelle ("Graphical User Interface" GUI) zu erstellen.

Diese Separation erschwert die Planung der Roboterapplikation einschließlich der Kontrollschnittstelle.

Aufgabe der vorliegenden Erfindung ist es daher, eine bessere Planung einer Roboterapplikation zu ermöglichen.

Diese Aufgabe wird durch eine Entwicklungsumgebung mit den Merkmalen des Anspruchs 1 gelöst. Anspruch 6 stellt ein Verfahren, Anspruch 9 ein Computerprogrammprodukt zur Durchführung eines solchen Verfahrens in einer erfindungsgemäßen Entwicklungsumgebung unter Schutz. Die Unteransprüche betreffen vorteilhafte Weiterbildungen.

Erfindungsgemäß wird vorgeschlagen, ein Modell einer Kontrollschnittstelle einer Roboterapplikation in eine Entwicklungsumgebung zur Planung der Roboterapplikation auf Basis eines Modells der Roboterapplikation zu integrieren. Vorteilhaft ermöglicht dies beispielsweise eine Visualisierung und/oder Simulation der Kontrollschnittstelle beim Planen der Roboterapplikation.

Eine Entwicklungsumgebung im Sinne der vorliegenden Erfindung umfasst Hardware mit einer oder mehreren Eingabeeinrichtungen und einer oder mehreren Ausgabeeinrichtungen und/oder mit einer oder mehreren Ein- und Ausgabeeinrichtungen wie Tastatur, Maus, Joystick, Touchscreen, Bildschirm, Virtual Reality (VR)-Umgebung, sowie mit einer oder mehreren Recheneinrichtungen und einer oder mehreren Speichereinrichtungen und/oder mit einer oder mehreren Rechen- und Speichereinrichtungen, und Software, insbesondere ein oder mehrerer Programme bzw. Programmmodule, insbesondere Editoren, vorzugsweise zwei- oder dreidimensionale Editoren,.

Insbesondere ein oder mehrere Roboter, Robotersteuerungen, Werkzeuge, Werkstücke und/oder Anlagenkomponenten einer Automatisierungsanlage bzw. -zelle, beispielsweise Transporteinrichtungen wie Förderer, Portale und dergleichen, und/oder ein oder mehrere Prozesse, beispielsweise automatisierte Schweiß-, Klebe-, Lackier-, spanende, umformende, Montage- oder andere Prozesse können eine Roboterapplikation im Sinne der vorliegenden Erfindung bilden.

Entsprechend kann ein Modell einer Roboterapplikation zum Beispiel ein oder mehrere Robotermodelle, beispielsweise kinematische oder dynamische Mehrkörpermodelle, Steuerungsmodelle, beispielsweise Reglerstrukturen wie etwa im de facto Industriestandard MatLab-SimuLink, Werkzeugmodelle, beispielweise Abmessungen und Prozessgrößen wie Arbeitsmittelabgabe, Werkstückmodell, zum Beispiel geometrische Dimensionen, Werkstoff- und Trägheitsparameter, Anlagenmodelle, insbesondere die räumliche Anordnung von Anlagekomponenten zueinander und/oder zu einem Werkstück, und/oder Prozessmodelle, insbesondere Zeitverläufe, Zustände, Zustandsübergänge, Aktionen, Bearbeitungspunkte und dergleichen umfassen.

Eine Planung einer Roboterapplikation auf Basis eines Modells mittels der Entwicklungsumgebung kann insbesondere die Auswahl und Anordnung von Anlagekomponenten wie Robotern und Werkzeugen relativ zueinander, zu einer Umgebung und/oder einem Werkstück, die Vorgabe von Aktionen der Anlage, insbesondere die Generierung und/oder Modifikation von Prozessabläufen, Werkzeug- und/oder Roboterbahnen, die Optimierung solcher Bahnen und/oder die Generierung von Arbeitsanweisungen, insbesondere Programmen, für Steuerungen der Anlage umfassen.

Ein Kontrollieren einer Roboterapplikation kann beispielsweise deren Bedienung, insbesondere ein Starten und/oder Stoppen, ihre Überwachung und/oder ihre Modifikation, beispielsweise das Ändern von Applikationsparametern wie etwa das Hinzufügen, Entfernen oder Verändern von von einem Roboter anzufahrenden Soll-Posen umfassen.

Eine Kontrollschnittstelle umfasst ein mobiles, insbesondere portables, Bediengerät wie beispielsweise ein Bedienhandgerät bzw. ein Kontroll-Panel, ein Notebook oder ein PDA ("Personal Digital Assistent"), mit Ein- und/oder Ausgabemöglichkeiten wie Tasten, Schaltern, Joystick, Touchscreen, Bildschirm oder Warnlampen. Insbesondere können eine oder mehrere Bedienoberflächen, etwa die Anzeigen bzw. Ansichten eines Bildschirms, insbesondere Touchscreens, eine bzw. mehrere Kontrollschnittstellen im Sinne der vorliegenden Erfindung bilden.

Dementsprechend kann insbesondere eine Abbildung oder mathematische, physikalisch oder informationstechnologische Beschreibung einer Kontrollschnittstelle, die eine Visualisierung und/oder Simulation der Kontrollschnittstelle ermöglicht, ein Modell der Kontrollschnittstelle bilden.

Dieses ist erfindungsgemäß mit dem Modell der Roboterapplikation verknüpft, so dass parallel die Kontrollschnittstelle auf Basis des Schnittstellenmodells und die Roboterapplikation auf Basis des Applikationsmodells visualisiert und/ simuliert und in einer Ausführung generiert und/oder modifiziert werden können. Vorzugsweise kann das Schnittstellenmodell dabei automatisch auf Basis des Applikationsmodells generiert, modifiziert, visualisiert bzw. simuliert werden. Wird beispielsweise dem Applikationsmodell ein Modell eines weiteren Roboters oder Prozesses, beispielsweise Bahnabschnittes, hinzugefügt, können automatisch entsprechende Ein- und/oder Ausgabemöglichkeiten für diesen Roboter bzw. Prozess dem Modell der Kontrollschnittstelle hinzugefügt werden.

Der Entwickler hat somit in einer bevorzugten Ausführung parallel, beispielsweise in Form neben- und/oder übereinander angeordneter oder wahlweise angezeigter Bildschirmfenster, eine Visualisierung der Roboterapplikation, zum Beispiel der Roboter einer Anlage, und der Kontrollschnittstelle, beispielsweise einer Bedienoberfläche eines Bedienhandgerätes, und kann so Auswirkungen von Eingaben durch das Bedienhandgerät auf die Applikation, beispielsweise die Reaktion eines Roboters auf die Betätigung einer Taste, oder Auswirkungen von Aktionen der Applikation, beispielsweise dem Abfahren eines Bahnabschnittes durch einen Roboter, auf die Anzeige des Bedienhandgerätes, beispielsweise die Anzeige der aktuellen Position, von Prozessparametern oder dergleichen simulieren und so zum Beispiel erlernen oder prüfen und gegebenenfalls modifizieren.

Erfindungsgemäß sind Daten des Applikationsmodells und des Schnittstellenmodells miteinander verknüpft. Hierzu können die Daten beispielsweise in einer gemeinsamen Datenbasis abgespeichert sein oder gegenseitig gespiegelt werden. Vorzugsweise werden Daten von dem Applikationsmodell auf Daten des Schnittstellenmodells abgebildet und/oder Daten von dem Schnittstellenmodell auf Daten des Applikationsmodells abgebildet. Beispielsweise können in der Entwicklungsumgebung auf Basis des Applikationsmodells von einem Roboter anzufahrende Posen, einzunehmende Zustände und/oder Aktionen, beispielsweise Werkzeug- oder Schaltaktionen, die in einer Ablaufsteuerung vorgegeben sind, auf entsprechende Symbole auf einer Bedienoberfläche abgebildet oder umgekehrt Eingabemöglichkeiten der Kontrollschnittstelle, etwa ein Nothalt-Schalter, auf entsprechende, gegebenenfalls zu erstellende, Aktionen der Applikation, etwa einen gesteuerten Stop oder sicheren Rückzug, abgebildet werden. In einer bevorzugten Ausführung werden eine einheitliche Datenstruktur für Applikations- und Schnittstellenmodell verwendet und/oder es sind entsprechende Schnittstellen zwischen Applikations- und Schnittstellenmodell vorgesehen.

Erfindungsgemäß ist das Schnittstellenmodell und vorzugsweise auch das Applikationsmodell veränderbar. Erfindungsgemäß weist die Entwicklungsumgebung hierzu einen oder mehrere entsprechende Editoren, insbesondere 2D- oder 3D-Editoren auf, mit denen der Bediener, vorzugsweise graphikbasiert wie beispielsweise über eine GUI, "drag&drop"-, Anklick- und ähnliche Funktionalitäten das Schnittstellenmodell und vorzugsweise auch das Applikationsmodell verändern, beispielsweise dem Applikationsmodell eine Applikationskomponente wie ein Robotermodell oder dem Schnittstellenmodell eine weitere Ein- oder Ausgabemöglichkeit wie zum Beispiel die Anzeige von Zusatzinformationen oder Dialogseiten hinzufügen kann. Erfindungsgemäß kann ein Bediener mit einem Editor, insbesondere graphikbasiert, dem Schnittstellenmodell eine weitere Ein- oder Ausgabemöglichkeit hinzufügen.

Erfindungsgemäß weist eine Entwicklungsumgebung eine, insbesondere echtzeitfähige, Schnittstelle zur Kommunikation mit der Kontrollschnittstelle und in einer Ausführung der realen Roboterapplikation auf. Dies ermöglicht in einer Ausführung einerseits Hardware in the Loop-Simulationen und andererseits die Synchronisation des Schnittstellen- und gegebenenfalls des Applikationsmodells, insbesondere deren Anzeige, mit der realen Roboterapplikation bzw. deren Kontrollschnittstelle. Erfindungsgemäß kann auf diese Weise auch eine reale Kontrollschnittstelle auf Basis des Schnittstellenmodells, bevorzugt automatisch, konfiguriert, beispielsweise ihre Anzeige entsprechend dem Schnittstellenmodell ausgebildet werden.

Weitere Vorteile und Merkmale ergeben sich aus den Unteransprüchen und den Ausführungsbeispielen. Hierzu zeigt, teilweise schematisiert, die einzige:

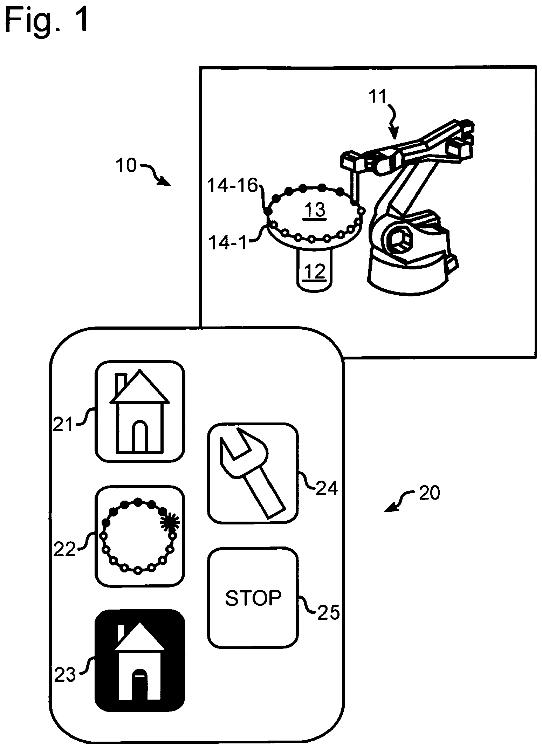

- Fig. 1:: ausschnittsweise eine Anzeige einer Entwicklungsumgebung nach einer Ausführung der vorliegenden Erfindung.

Fig. 1 zeigt einen Ausschnitt einer graphischen Anzeige einer Entwicklungsumgebung nach einer Ausführung der vorliegenden Erfindung.

Man erkennt in der oberen Bildhälfte eine Visualisierung eines Modells 10 einer Roboterapplikation, die ein auf einem Werkzeugtisch 12 aufgespanntes Werkstück 13 und einen Kleberoboter 11 umfasst, der, ausgehend von einer Home-Position, mit seinem Klebepistolen-TCP nacheinander die in der Visualisierung durch Kugeln 14-1 bis 14-16 angedeuteten Klebepunkte auf dem Werkstück 13 anfahren soll, um anschließend wieder in die Home-Position zurückzukehren.

Das Modell der Applikation wurde zuvor mittels einer graphischen Benutzerschnittstelle generiert (nicht dargestellt), indem zunächst das Modell 13 des Werkstückes aus dessen CAD-Daten generiert, anschließend mittels Maus auf dem Modell 12 des Werkstücktisches positioniert und auf ihm die Klebepunkte 14-1 bis 14-16 vorgegeben wurden. Anschließend wurde aus einer Bibliothek ein Modell 10 eines geeigneten Roboters ausgewählt, dessen Basis im dargestellten Modell der Klebezelle positioniert und dessen TCP mit dem Modell der Klebepistole verbunden wurde, für die aus den Klebepunkten 14-1 bis 14-16 eine Werkzeugbahn generiert wurde. Hieraus kann eine Ablaufsteuerung für die Roboterapplikation generiert, beispielsweise in Befehle für eine Robotersteuerung compiliert werden.

Zur Kontrolle, insbesondere zur Bedienung und/oder Überwachung der Roboterapplikation weist diese ein tragbares Kontroll-Panel mit Touchscreen auf.

Erfindungsgemäß wird ein Modell 20 des Kontroll-Panels in die Entwicklungsumgebung integriert. Hierzu wird das Modell 20 der Kontrollschnittstelle parallel zum Modell 10 der Applikation in einer zwei- bzw. dreidimensionalen Ansicht auf einem Bildschirm der Entwicklungsumgebung visualisiert, der in Fig. 1 ausschnittsweise dargestellt ist.

Daten des Schnittstellenmodells 20 sind mit Daten des Applikationsmodells 10 verknüpft. Beispielsweise werden zu einzelnen Prozessabschnitten des Applikationsmodells 10, nämlich der ursprünglichen Home-Position, der generierten Klebebahn, und der abschließend anzufahrenden Home-Position für das Schnittstellenmodell 20 automatisch entsprechende Graphiksymbole 21 bis 23 generiert und auf der Anzeige des Handgerätes angeordnet. Auf der anderen Seite weist das Schnittstellenmodell 20 standardmäßig Graphiksymbole 24, 25 zur Konfigurierung eines Werkzeugs bzw. Einleitung eines Nothalts auf. Diese Aktionen werden umgekehrt automatisch auf entsprechende Prozessabläufe im Modell 10 der Applikation abgebildet.

Der Bediener kann die Modelle 10, 20 mittels einer GUI modifizieren, zum Beispiel aus einem Katalog per "drag&drop" dem Applikationsmodell weitere Roboter oder dem Schnittstellenmodell weitere Anzeigen, etwa Dialogseiten oder Ausgaben von Prozesswerten, hinzufügen (nicht dargestellt).

Neben der Visualisierung kann in der Entwicklungsumgebung die Roboterapplikation und die Kontrollschnittstelle auf Basis des jeweiligen Modells 10 bzw. 20 simuliert werden. Betätigt der Bediener beispielsweise eine Starttaste auf dem Modell 20 des Bedienhandgerätes (nicht dargestellt), fährt der Roboter 11 im Modell 10 die einzelnen Bahnabschnitte simuliert ab. Synchron werden dabei durch die Datenverknüpfung beider Modelle auch die entsprechenden Veränderungen der Kontrollschnittstelle simuliert. So wandelt beispielsweise ein abgearbeiteter Klebepunkt 14-1 bis 14-16 im Modell 10 der Applikation seine Farbe. Entsprechend wird dies auch im Graphiksymbol 22 des Modells 20 der Anzeige des Kontroll-Panels simuliert, wobei ein gerade bearbeiteter Klebepunkt zusätzlich aufleuchtet.

Simuliert der Bediener, beispielsweise mittels Maus (nicht dargestellt) in dem in Fig. 1 dargestellten Zustand zum Beispiel eine Betätigung des Nothalteschalters 25 oder des Icons 23 zum abschließenden Anfahren der Home-Position, wird auf Basis der Modelle 10, 20 eine entsprechende Reaktion der Roboterapplikation simuliert.

Anschließend oder auch parallel kann die reale Schnittstelle automatisch auf Basis des Schnittstellenmodells konfiguriert werden, indem beispielsweise entsprechender Programmcode für ein Bedienhandgerät erstellt, compiliert und auf das Bedienhandgerät übertragen wird, so dass das reale Bedienhandgerät entsprechend dem Schnittstellenmodell 20 agiert, insbesondere die in Fig. 1 dargestellte, in der Entwicklungsumgebung visualisierte Bedienoberfläche mit den Graphiksymbolen 21 bis 25 aufweist und bei deren Betätigung die im Modell 20 vorgegebenen Reaktionen, beispielsweise einen Nothalt oder dergleichen, ausführt.

Auf diese Weise kann einerseits ein Bediener eine applikationsspezifische Kontrollschnittstelle einfach generieren und modifizieren sowie die Applikation und die Kontrollschnittstelle vorab simulieren und so prüfen. Auf der anderen Seite erlaubt die erfindungsgemäße Entwicklungsumgebung auch ein Training des Bedieners, der die Handhabung der Kontrollschnittstelle auf Basis ihres Modells 20 üben und dabei die Reaktion der Applikation aus der Simulation auf Basis ihres Modells 10 kennen lernen kann.

### Bezugszeichenliste

- 10: Applikationsmodell
- 11: Robotermodell (Applikationskomponentenmodell)
- 12: Werkzeugtischmodell (Applikationskomponentenmodell)
- 13: Werkstückmodell (Applikationskomponentenmodell)
- 14-1, 14-16: Klebepunkt
- 20: Schnittstellenmodell
- 21,: 23Anzeige-Element "Home-Position"
- 22: Anzeige-Element "Klebebahn"
- 24: Anzeige-Element "Werkzeugkonfiguration"
- 25: Anzeige-Element "Nothalt"

## Patentansprüche

1. Entwicklungsumgebung zur Planung einer Roboterapplikation, die
ein Modell (10) der Roboterapplikation; und
ein Modell (20) einer Kontrollschnittstelle umfasst,
wobei das Modell (20) der Kontrollschnittstelle mit dem Modell (10) der Roboterapplikation so verknüpft ist, dass parallel die Kontrollschnittstelle auf Basis des Schnittstellenmodells und die Roboterapplikation auf Basis des Applikationsmodells visualisiert und simuliert werden können;
wobei die Kontrollschnittstelle ein mobiles Bediengerät mit Ein- und/oder Ausgabemöglichkeiten umfasst;
wobei die Entwicklungsumgebung aufweist:
- Hardware,
wobei die Hardware wenigstens eine Eingabeeinrichtung und wenigstens eine Ausgabeeinrichtung aufweist und/oder die Hardware wenigstens eine Ein- und Ausgabeeinrichtung aufweist,
wobei die Hardware wenigstens eine Recheneinrichtung und wenigstens eine Speichereinrichtung aufweist und/oder die Hardware wenigstens einer Rechen- und Speichereinrichtung aufweist;
- Software;
- wenigstens einen Editor, mit dem ein Bediener, insbesondere graphikbasiert, dem Schnittstellenmodell eine weitere Ein- oder Ausgabemöglichkeit hinzufügen kann; und
- eine Schnittstelle zur Kommunikation mit der Kontrollschnittstelle **dadurch gekennzeichnet, dass** die Kontrollschnittstelle auf Basis des Schnittstellenmodells konfiguriert, insbesondere ihre Anzeige entsprechend dem Schnittstellenmodell ausgebildet, werden kann;
wobei eine Datenverknüpfung zwischen dem Applikationsmodell und dem Schnittstellenmodell vorgesehen ist; und
wobei die Entwicklungsumgebung zur Durchführung der Schritte eingerichtet ist:
- automatisch Generieren und/oder Modifizieren eines Schnittstellenmodells (20); und
- Konfigurieren einer Kontrollschnittstelle auf Basis des Schnittstellenmodells.

2. Entwicklungsumgebung nach dem vorhergehenden Anspruch, **dadurch gekennzeichnet, dass** das Applikationsmodell veränderbar ist.

3. Entwicklungsumgebung nach einem der vorhergehenden Ansprüche, **gekennzeichnet durch** eine Simulationseinrichtung zur Simulation der Roboterapplikation und/oder der Kontrollschnittstelle auf Basis des jeweiligen Modells.

4. Entwicklungsumgebung nach einem der vorhergehenden Ansprüche, **dadurch gekennzeichnet, dass** das Modell der Roboterapplikation wenigstens ein Robotermodell (11), Steuerungsmodell, Werkzeugmodell, Werkstückmodell (13), Anlagenmodell (12) und/oder Prozessmodell umfasst.

5. Entwicklungsumgebung nach einem der vorhergehenden Ansprüche, **gekennzeichnet durch** eine, insbesondere echtzeitfähige, Schnittstelle zur Kommunikation mit der Roboterapplikation.

6. Verfahren zur Planung einer Roboterapplikation mittels einer Entwicklungsumgebung nach einem der vorhergehenden Ansprüche, mit den Schritten:
insbesondere automatisch, Generieren und/oder Modifizieren eines Schnittstellenmodells (20) und
Konfigurieren einer Kontrollschnittstelle auf Basis des Schnittstellenmodells.

7. Verfahren nach dem vorhergehenden Anspruch, **gekennzeichnet durch** wenigstens einen der Schritte:
Generieren und/oder Modifizieren eines Applikationsmodells (10) und
Planung der Roboterapplikation auf Basis des Schnittstellenmodells; und/oder Verwenden von Daten von dem einen von dem Applikationsmodell und dem Schnittstellenmodell in dem anderen von dem Applikationsmodell und dem Schnittstellenmodell.

8. Verfahren nach Anspruch 6 oder 7, **dadurch gekennzeichnet, dass** Daten des einen von dem Applikationsmodell und dem Schnittstellenmodell auf Daten des anderen von dem Applikationsmodell und dem Schnittstellenmodell abgebildet werden.

9. Computerprogrammprodukt mit einem Computerprogramm, das ein Verfahren nach einem der Ansprüche 6 bis 8 ausführt, wenn es in einer Entwicklungsumgebung nach einem Ansprüche 1 bis 5 ausgeführt wird.

## Claims

1. A development environment for planning a robot application, wherein the development environment comprises
a model (10) of the robot application; and
a model (20) of a control interface,
wherein the model (20) of the control interface is linked to the model (10) of the robot application in such a way that, in parallel, the control interface can be visualised and simulated on the basis of the model of the interface and the robot application can be visualised and simulated on the basis of the application model;
wherein the control interface comprises a mobile operating device with input and/or output capabilities;
wherein the development environment comprises:
- hardware,
wherein the hardware comprises at least one input device and at least one output device, and/or the hardware comprises at least one input and output device, wherein the hardware comprises at least one computing device and at least one memory device and/or the hardware comprises at least one computing and memory device;
- software;
- at least one editor by means of which an operator can add a further input or output facility to the model of the interface, in particular in a graphics-based manner; and
- an interface for communicating with the control interface, **characterised in that** the control interface can be configured on the basis of the model of the interface,
in particular **in that** its display can be constructed in a manner corresponding to the model of the interface;
wherein a data link is provided between the application model and the model of the interface; and
wherein the development environment is arranged for the carrying out of the steps of:
- automatically generating and/or modifying a model of the interface (20); and
- configuring a control interface on the basis of the model of the interface.

2. The development environment according to the preceding claim, **characterised in that** the application model can be changed.

3. The development environment according to any one of the preceding claims, **characterised by** a simulation device for simulating the robot application and/or the control interface on the basis of the respective model.

4. The development environment according to any one of the preceding claims, **characterised in that** the model of the robot application comprises at least one robot model (11), at least one control model, at least one tool model, at least one workpiece model (13), at least one system model (12) and/or at least one process model.

5. The development environment according to any one of the preceding claims, **characterised by** an interface for communicating with the robot application, in particular an interface with real-time capability for communicating with the robot application.

6. A method of planning a robot application by means of a development environment according to any one of the preceding claims, wherein the method comprises the steps of:
generating and/or modifying a model of the interface (20), in particular automatically generating and/or modifying a model of the interface (20), and
configuring a control interface on the basis of the model of the interface.

7. The method according to the preceding claim, **characterised by** at least one of the steps of:
generating and/or modifying an application model (10) and
planning the robot application on the basis of the model of the interface; and/or
using data from one of the application model and the model of the interface in the other of the application model and the model of the interface.

8. The method according to claim 6 or 7, **characterised in that** data of one of the application model and the model of the interface is mapped to data of the other of the application model and the model of the interface.

9. A computer program product which comprises a computer program that carries out a method according to any one of the claims 6 to 8 when it is being executed in a development environment according to any one of the claims 1 to 5.

## Revendications

1. Environnement de développement pour la planification d'une application de robot, qui comporte
un modèle (10) de l'application de robot ; et
un modèle (20) d'une interface de contrôle,
dans lequel le modèle (20) de l'interface de contrôle est relié au modèle (10) de l'application de robot de sorte que parallèlement l'interface de contrôle puisse être visualisée et simulée sur la base du modèle d'interface et l'application de robot puisse être visualisée et simulée sur la base du modèle d'application ;
dans lequel l'interface de contrôle comporte un appareil de commande mobile avec des possibilités d'entrée et/ou de sortie ;
dans lequel l'environnement de développement présente :
- un matériel,
dans lequel le matériel présente au moins un dispositif d'entrée et au moins un dispositif de sortie et/ou le matériel présente au moins un dispositif d'entrée et de sortie,
dans lequel le matériel présente au moins un dispositif de calcul et au moins un dispositif de mémoire et/ou le matériel présente au moins un dispositif de calcul et de mémoire ;
- un logiciel ;
- au moins un éditeur, avec lequel un opérateur peut ajouter, en particulier à base de graphique, au modèle d'interface une autre possibilité d'entrée ou de sortie ; et
- une interface de communication avec l'interface de contrôle, **caractérisé en ce que** l'interface de contrôle peut être configurée sur la base du modèle d'interface, en particulier son affichage réalisé selon le modèle d'interface ;
dans lequel une liaison de données est prévue entre le modèle d'application et le modèle d'interface ; et
dans lequel l'environnement de développement est conçu pour la réalisation des étapes :
- générer et/ou modifier automatiquement un modèle d'interface (20) ; et
- configurer une interface de contrôle sur la base du modèle d'interface.

2. Environnement de développement selon la revendication précédente, **caractérisé en ce que** le modèle d'application est modifiable.

3. Environnement de développement selon l'une quelconque des revendications précédentes, **caractérisé par** un dispositif de simulation pour la simulation de l'application de robot et/ou de l'interface de contrôle sur la base du modèle respectif.

4. Environnement de développement selon l'une quelconque des revendications précédentes, **caractérisé en ce que** le modèle de l'application de robot comporte au moins un modèle de robot (11), un modèle de commande, un modèle d'outil, un modèle de pièce à usiner (13), un modèle d'installation (12) et/ou un modèle de processus.

5. Environnement de développement selon l'une quelconque des revendications précédentes, **caractérisé par** une interface en particulier pouvant travailler en temps réel pour la communication avec l'application de robot.

6. Procédé de planification d'une application de robot au moyen d'un environnement de développement selon l'une quelconque des revendications précédentes, avec les étapes :
générer et/ou modifier en particulier automatiquement un modèle d'interface (20) ; et
configurer une interface de contrôle sur la base du modèle d'interface.

7. Procédé selon la revendication précédente, **caractérisé par** au moins une des étapes :
générer et/ou modifier un modèle d'application (10) et
planifier l'application de robot sur la base du modèle d'interface ; et/ou
utiliser les données de l'un du modèle d'application et du modèle d'interface dans l'autre du modèle d'application et du modèle d'interface.

8. Procédé selon la revendication 6 ou 7, **caractérisé en ce que** des données de l'un du modèle d'application et du modèle d'interface sont reproduites sur des données de l'autre du modèle d'application et du modèle d'interface.

9. Produit de programme informatique avec un programme informatique qui réalise un procédé selon l'une quelconque des revendications 6 à 8, lorsqu'il est réalisé dans un environnement de développement selon l'une des revendications 1 à 5.
